Europäisches Patentamt

European Patent Office

Office européen des brevets

(11) Veröffentlichungsnummer: **0 413 091 A1**

# (12) EUROPÄISCHE PATENTANMELDUNG

(21) Anmeldenummer: 90108879.9

(22) Anmeldetag: 11.05.90

(51) Int. Cl.5: **F23G 7/06**

(30) Priorität: 16.06.89 DE 3919757

(43) Veröffentlichungstag der Anmeldung:
20.02.91 Patentblatt 91/08

(84) Benannte Vertragsstaaten:
AT BE CH DE ES FR GB IT LI

(71) Anmelder: A. Monforts GmbH & Co
Schwalmstrasse 301
D-4050 Mönchengladbach 2(DE)

(72) Erfinder: Freiberg, Helge,
Dr.-Carl-Goerdeler-Strasse 12
D-4050 Mönchengladbach 4(DE)
Erfinder: Pabst, Manfred
Am Engelshof 3
D-5000 Köln 40(DE)

(74) Vertreter: von Creytz, Dietrich, Dipl.-Phys.
Tannenweg 25
D-5144 Wegberg(DE)

(54) Thermische Nachverbrennungsanlage und Verfahren zum Betrieb der Anlage.

(57) Für die thermische Nachverbrennungsanlage mit Gas- oder Ölbrenner zur Reinigung der Abluf einer Textilveredelungsmaschine wird die Brennkammer eines Gasturbinenaggregates, welches an eine Dynamomaschine angeschlossen ist, verwendet. Zum Beheizen der Textilveredelungsmaschine erfolgt eine Wärmerückgewinnung aus der Nachverbrennung durch einen Wärmetauscher.

EP 0 413 091 A1

Die Erfindung betrifft eine thermische Nachverbrennungsanlage mit Gas- oder Ölbrenner (oder Brenner für andere Brennstoffe) für die Reinigung der Abluft einer Textilveredlungsmaschine mit Wärmerückgewinnung für einen Wärmetauscher zum Beheizen der zu entsorgenden Maschine.

Für die Abluftreinigung von Textilveredlungsmaschinen, z. B. Spannrahmen, werden thermische Nachverbrennungsanlagen eingesetzt, deren Herzstück eine Brennkammer ist. Vor dem Einfließen in die Brennkammer wird die zu reinigende Abluft zunächst über einen Luft/Luftrohrbündel-Wärmetauscher geleitet. Hierbei wird sie auf ca. 500° C aufgewärmt. Erst die so vorgewärmte Abluft gelangt in den Brennraum der Brennkammer. Hier wird die Abluft mit Hilfe eines Spezialbrenners für Gas- oder Ölheizung auf ca. 750° C erhitzt, dabei verbrennen in einer Verweilzeit von ca. 0,5 Sekunden praktisch alle Schadstoffe. Von der Brennkammer gelangt die nunmehr säubere Luft durch alle Rohre des vorgenannten Luft/Luftrohrbündel-Wärmetauschers. Sie kühlt hierbei auf ca. 500° C ab. Anschließend wird die Luft einem weiteren Wärmetauscher zugeführt, der dazu dient, die zu entsorgende Maschine auf deren Arbeitstemperatur aufzuheizen. In dem zweiten Wärmetauscher wird die gereinigte Luft auf ca. 350° C abgekühlt. Der restliche Wärmeinhalt der gereinigten Luft kann zwecks Wärmerückgewinnung über weitere Wärmetauscher geleitet werden. Wenn in dem fraglichen Betrieb wesentliche weitere Wärmeverbraucher nicht vorhanden sind, ergeben sich für den Betreiber immer wieder Probleme der Abführung oder Weiterverwendung der überschüssigen Wärmeenergie. Wegen der Kosten einer Weiterleitung über größere Entfernungen oder bei unregelmäßigem Verbrauch der Wärmeabnehmer, z. B. im Fall einer Raumheizung, werden oft erhebliche Energiemengen ungenutzt über Dach abgeblasen.

Der Erfindung liegt die Aufgabe zugrunde, die thermische Nachverbrennungsanlage so auszubilden, daß die zurückgewinnbare Wärmeenergie bei Normal betrieb im wesentlichen in Nutzenergie umzuwandeln ist. Für die eingangs genannte thermische Nachverbrennungsanlage mit Gas- oder Ölbrenner ist die erfindungsgemäße Lösung gekennzeichnet durch die Verwendung der Brennkammer eines eine Dynamomaschine antreibenden Gasturbinenaggregats als Brenner. Anstelle von Gas- oder Ölbrennern kommen auch Brenner für andere Brennstoffe als Öl oder Gas infrage.

Die Erfindung läßt sich auch beschreiben als Verfahren zum thermischen Nachverbrennen mit Hilfe eines Öl- oder Gasbrenners für die Reinigung der Abluft einer Textilveredlungsmaschine mit Wärmerückgewinnung über einen Wärmetauscher zum Beheizen der zu entsorgenden Maschine. Hierbei besteht die erfindungsgemäße Lösung darin, daß die Abluft in den Verdichter eines eine Dynamomaschine treibenden Gasturbinenaggregats eingespeist wird.

Im vorliegenden Zusammenhang gilt dem allgemeinen Sprachgebrauch gemäß als Gasturbinenaggregat eine Anlage mit den Hauptbestandteilen Verdichter, Brenner und Turbine. Die eigentliche Gasturbine ist also nur der Entspannungsteil der ganzen Anlage. Unter dem Begriff "Dynamomaschine" wird ein Generator, also in der Starkstromtechnik eine rotierende elektrische Maschine zur Umwandlung mechanischer Energie in elektrische Energie verstanden.

Durch die Erfindung wird erreicht, daß die nach Abführen der zum Beheizen der zu entsorgenden Maschine erforderlichen Wärmeenergie verbleibende Wärmeenergie der gereinigten Abluft unmittelbar in elektrische Energie umzuwandeln ist. Wenn nämlich der zu reinigende Abluftstrom in den Verdichter und von dort aus in die Brennkammer des Gasturbinenaggregats geleitet wird, kann die nachgeschaltete Turbine nicht nur den Verdichter sondern auch einen Generator antreiben. Im Generator kann ein großer Teil der verbleibenden Energie der gereinigten Abluft in elektrischen Strom umgewandelt werden. Dieser wiederum kann in den elektrischen Antrieben der zu entsorgenden Maschine aber auch in der gesamten übrigen, umgebenden Fabrikanlage, eingesetzt werden.

Die gereinigte und nach der Turbine entspannte Abluft enthält immer noch so viel Energie, daß diese zur Erzeugung von Prozeßwärme genutzt werden kann. So kann diese Luft beispielsweise einem Dampfkessel oder Thermoölkessel zugeführt werden, in welchen über Wärmetauscher die Heizenergie für die zu entsorgenden Maschinen erzeugt wird.

Zur Veranschaulichung der durch die Erfindung geschaffenen Möglichkeiten wird auf das folgende Ausführungsbeispiel verwiesen:

Die gesamte Abluftmenge der textilen Spannrahmen eines Werkes beträgt in einem realistischen Fall etwa 100.000 m³/h Abluft, das entspricht etwa 100.000 kg/h Abluft. Daraus ergibt sich bei einem Generator-Wirkungsgrad von 0,92 eine Nutzleistung von etwa 1.000 KW.

**Ansprüche**

1. Thermische Nachverbrennungsanlage mit Gas- oder Ölbrenner für die Reinigung der Abluft einer Textilveredlungsmaschine mit Wärmerückgewinnung über einen Wärmetauscher zum Beheizen der zu entsorgenden Maschine, **gekennzeichnet durch** die Verwendung der Brennkammer eines eine Dynamomaschine antreibenden Gasturbinenaggregats als Brenner.

2. Verfahren zum thermischen Nachverbrennen mit Hilfe eines Öl- oder Gasbrenners für die Reinigung der Abluft einer Textilveredlungsmaschine mit Wärmerückgewinnung über einen Wärmetauscher zum Beheizen der zu entsorgenden Maschine,
**dadurch gekennzeichnet,**
daß die Abluft in den Verdichter eines eine Dynamomaschine treibenden Gasturbinenaggregats eingespeist wird.

3. Verfahren nach Anspruch 2,
**dadurch gekennzeichnet,**
daß die gereinigte und entspannte Abluft nach der Turbine zur Erzeugung von Prozeßwärme genutzt wird.

## Europäisches Patentamt

# EUROPÄISCHER RECHERCHENBERICHT

EP 90108879.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
|---|---|---|---|
| Y | EP - A2 - 0 319 468 (KOENIG) * Gesamt * -- | 1-3 | F 23 G 7/06 |
| Y | DE - A1 - 2 524 861 (LINDE) * Gesamt * -- | 1-3 | |
| A | DD - A - 109 431 (VOLVO FLYGMOTOR) * Gesamt * -- | 1-3 | |
| A | GB - A - 884 627 (REUTTENER TEXTILWERKE) * Gesamt * ---- | 1-3 | |

| | RECHERCHIERTE SACHGEBIETE (Int. Cl⁵) |
|---|---|
| | F 23 G 7/00<br>F 23 J 15/00<br>D 06 B 23/00 |

Der vorliegende Recherchenbericht wurde für alle Patentansprüche erstellt.

| Recherchenort | Abschlußdatum der Recherche | Prüfer |
|---|---|---|
| WIEN | 30-11-1990 | TSCHÖLLITSCH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82